# EUROPEAN PATENT APPLICATION

(11) **EP 1 104 961 A1**
(43) Date of publication of application: **06.06.2001**
(21) Application number: 99309739.3
(22) Date of filing: 03.12.1999
(51) Int. Cl.: H04L 12/413, H04B 7/00

(54) **Deferral of transmissions in wireless local area network**

(71) Applicant: Hewlett-Packard Company, A Delaware Corporation, Palo Alto, CA 94304 (US)
(72) Inventor: Johnson, Ian, Bristol BS7 0XA (GB); Shao, Zhimin, De Sheng Men Wai, Beijing 100101 (CN); Lawton, Michael, Stratford St. Mary, Colchester CO7 6JO (GB)
(74) Representative: Lawrence, Richard Anthony

(57) **Abstract**

A wireless local area network comprising a plurality of computing entities communicating over a common communications frequency within a local area network operates a transmission deferral method whereby each computing entity defers its own transmissions if it receives a signal at said communications frequency which is above a threshold value set within said computing entity, and which is decodable. Each computing entity is capable of varying dynamically the value of its threshold level above which receipt of signals results in the computing entity deferring its own transmission. Received signals on the communications frequency which are less than the threshold value do not result in the computing entity deferring its transmissions, but are ignored by the computing entity.

## Description

### Field of the Invention

The present invention relates to a method for maximizing channel use in a wireless network comprising a plurality of computing entities, particularly but not exclusively a plurality of networked computers in an indoor environment.

### Background to the Invention

Since the early 1970's, the success of the Ethernet project and other similar digital protocols has demonstrated the power and flexibility resulting from a plurality of computers sharing information across a digital network. However, until relatively recently, such commercial local area networks (LAN) were limited to a physical hard wired infrastructure in widespread applications.

In order to address a requirement for increased flexibility in computer networks there has been a drive to develop wireless local area networks whereby a plurality of computing entities such as personal computers, laptop computers, printers and the like exchange data via radio transceivers associated with each computing entity, where all entities transmit and receive on a common communications frequency, with access to the frequency being determined on a time division basis. Such systems are commercially available and produced by manufacturers such as Apple, Lucent Technologies, Proxim and NCR Wavelan.

Current wireless local area network technology operates according to the known international standards, industry practice standards and proprietary solutions, including for example the IEEE 802.11 standard which requires an operating frequency in the frequency band 2.4 GHz to 2.4835 GHz. Wireless networks enable ad-hoc collections of computing entities to form interconnected networks. Contained within the IEEE 802.11 standard is a collision avoidance protocol provided in order to minimize data packet "collisions" whereby two or more computing entities within a wireless LAN transmit data at a substantially same moment of time. It is known to minimize data packet collision by operating a carrier sense multiple access/collision avoidance (CSMA/CA) protocol. In this protocol, when a computing entity which forms a node of an ad-hoc wireless network, prepares to transmit a data packet, then the node operates in a receive mode to detect whether other nodes are currently transmitting. If the radio channel is clear, it then transmits the data packet. Otherwise, it chooses a random "back off factor" which determines an amount of time the node must wait until it is allowed to transmit a data packet. During a period in which a channel is clear, a transmitting node decrements a back off counter and when the back off counter reaches zero, the node transmits the data packet.

However, there is a problem encountered with such a collision avoidance protocol if a remote computing entity outside of the network is located with respect to the wireless network such that data packets transmitted by the remote computing entity are required, but are too attenuated or noisy to be decoded by the computing entities comprising the wireless network. Transmissions by the remote computing entity externally of the network may under the CSMA/CA protocol inhibit computing entity nodes within the wireless network from transmitting.

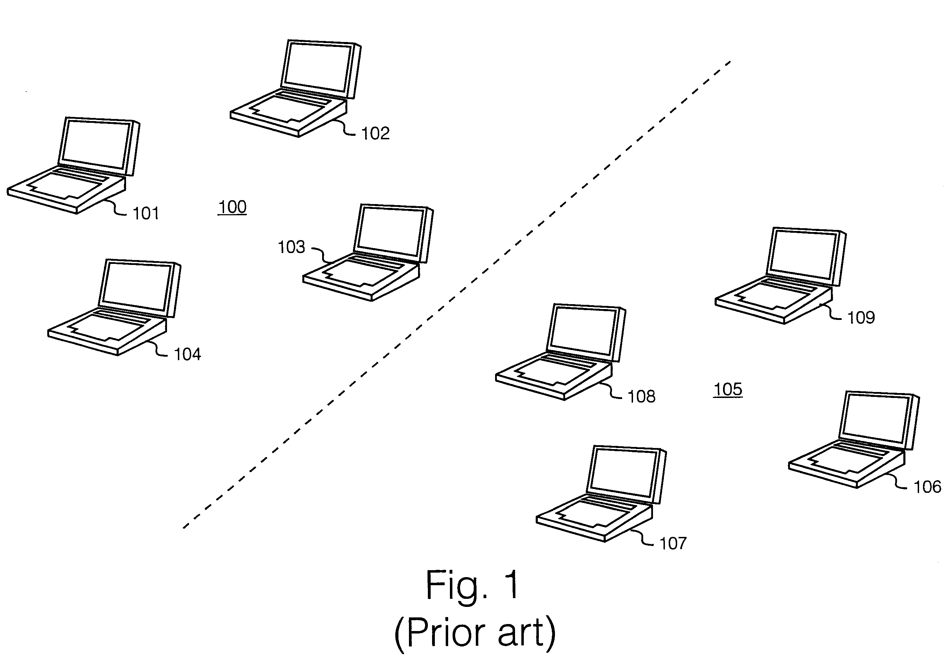

Referring to Fig. 1 herein, there is illustrated one example of a problem in a prior art wireless local area network system, that a first local area network 100 comprising a first plurality of computing entities, 101-104 may pick up interference from a second local area network 105 comprising a second plurality of computing entities 106-109, which communicate on a same carrier frequency. Each of the computing entities in the first local area network 100 defer their communications with other computing entities in the same first local area network, because of interfering transmissions originating from computing entities in the second local area network 105.

In an indoor radio environment, computing entities in the first network are able to pick up transmissions from computing entities on the second network. The level of signal detected by the first network from transmissions made within the second network may not be high enough to be able to determine which particular computing entity the transmission is intended for. However, since the first network entities operate on the principle of deferring their own transmission where there is already a transmission on the frequency, internal communications between entities of the second network interfere with the operation of the first network. The situation is similar as between the first network and the second network, where communications between entities in the first network may prevent communication between entities in the second network. This constitutes inefficient use of frequency bandwidth, and the problem increases where a large number of networks are included in physical proximity in an indoor environment.

In known prior art local area networks of wireless computing entities, as soon as one computing entity detects that another computing entity is transmitting on a common communications frequency, then the detecting computing entity defers its own transmission pending cessation of the transmission of the detected transmitting computing entity. Each computing entity does not commence transmission until it detects that no other transmissions are occurring at the carrier frequency. Even though the transmissions of the remote computing entity outside the network cannot be decoded by computing entities within the network, their presence inhibits communications between the entities in the network.

### Summary of the Invention

One object of the present invention is to provide a method and apparatus which enables communication between communicating entities of a computer network to make more efficient usage of the available transmission bandwidth, by reducing an amount of unavailable transmission time caused by interference from transmitting entities outside the network.

According to first aspect of the present invention there is provided a method for maximizing channel use in a wireless network comprising a plurality of computing entities communicating with each other over a plurality of wireless links, said method comprising the steps at a first said computing entity of:
determining a signal transmission threshold level at which a received signal having a signal strength above said level will cause inhibitation of transmit signals by a first said computing entity;
receiving a signal transmitted by a said computing entity;
measuring a signal strength of said received signal; and
if said measured signal strength is greater than said pre-determined threshold signal level, then inhibiting transmission of a said transmit signal.

Said step of determining a signal level transmission threshold may comprise the steps of:
comparing a signal strength of said received signal with said signal threshold level; and
if said received signal is successfully decoded without errors, and if said measured received signal strength is lower than said signal threshold level then reducing a value of said signal threshold level.

Preferably, said step of determining a signal threshold level occurs continuously during a normal operation of a said computing entity.

Said step of determining a signal threshold level may be performed during a calibration of said first computing entity.

According to second aspect of the present invention there is provided a means for maximizing channel use in a wireless network comprising a plurality of computing entities, said means comprising:
a radio transmitter;
a radio receiver;
a received signal strength measuring means for measuring a strength of a received signal from said receiver;
a decoding means for decoding a content of received signal data;
processor means configured to set a threshold level according to a result of said decoding; and
data storage means for storing data describing a plurality of received signals,
wherein said threshold level is set according to an analysis of accumulated data stored in said data storage means describing characteristics of a set of said received signals; and said transmitter is configured to be inhibited for transmission of signals in response to a said received signal having a signal strength above said threshold level.

According to third aspect of the present invention there is provided a communications device for communicating between a plurality of entities within a local area network by wireless transmission, said communications device comprising:
a transmitter device;
a receiver device;
a received signal strength indicator device;
a data processor unit; and
a memory;
wherein said communications device is capable of both receiving and sending transmissions at a common communications frequency;
wherein said communications device is configured to defer making a transmission upon receiving a wireless signal having a received signal strength above a preset signal strength threshold level value.

Suitably, said communications device is configured to ignore any received signals at the communications frequency which have a signal strength below the present threshold value, for the purpose of deferring transmissions of the communications device.

Preferably, the communications device stores an electronic data table comprising:
data describing a signal strength of at least one received signal;
a unique identifier identifying said at least one received signal; and
a data describing whether said at least one received signal was successfully decoded or not.

Preferably said data table stores:
data describing a computing entity from which a received signal originates;
a number of errors corrected in decoding said received signal; and
a time at which said received signal was received by said communications device.

Preferably said microprocessor device is configured by a stored program for setting and resetting said threshold level dynamically based upon data describing a plurality of received signal strengths of a plurality of received signals.

According to a fourth aspect of the present invention there is provided a method of communicating between a plurality of communicating computing entities in a wireless local area network system comprising said plurality of computing entities, said method comprising the steps of:
each said computing entity of said network sending and receiving wireless communications signals;
each said computing entity deferring transmission of its own transmitted signals for a time period after said computing entity receives a signal at said communications frequency said signal having a signal strength above a settable active threshold level.

Each said computing entity may defer its own transmissions if said received signal is above said threshold level and is decodable by said computing entity.

At least one said computing entity may dynamically vary its said threshold level in response to received wireless transmissions originating from other ones of said computing entities within said network.

At least one said computing entity may dynamically set its said threshold level according to a predetermined threshold level strategy stored in the form of pre-stored coded computer instructions.

Said threshold level may be set by performing the steps of:
measuring a signal strength of a received signal;
attempting to decode said signal;
if said signal is decodable, checking whether said signal strength is below a currently active threshold level value; and
resetting said threshold level value to a value based upon said strength of said received signal minus a predetermined decrement value.

A value of said threshold level may be set according to the steps of:
measuring a signal strength of a received signal;
attempting to decode said received signal;
if said received signal is decodable, comparing a strength of said signal with a currently active value of said threshold level; and
if said received signal is decodable, and a signal strength of said received signal is below said threshold level, resetting said value of said threshold level to a value based upon said received signal strength, minus a predetermined decrement value.

The method may further comprise the steps of:
if said received signal is not decodable, checking whether a strength of said received signal is above said currently active threshold level value; and
resetting said threshold level value to a value based upon said signal strength, plus a predetermined increment value.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 illustrates schematically a prior art local area network comprising a plurality of computing entities communicating by wireless link;
Fig. 2 illustrates schematically a network of computing entities communicating by means of a wireless local area network according to a first specific implementation of the present invention;
Fig. 3 illustrates schematically a first network of computing entities communicating according to first wireless local area network, which experiences interference from a remote computing entity in a second network of computing entities communicating according to a second wireless local area network;
Fig. 4 illustrates schematically a communications port card of a computing entity for communicating over a wireless local area network link with other computing entities in a wireless local area network;
Fig. 5 illustrates schematically a data packet for transmitting part of a data frame over a wireless link between the plurality of computing entities comprising the wireless local area network;
Fig. 6 illustrates schematically a data table stored in electronic format by a microprocessor of the communications port card of fig. 4;
Fig. 7 illustrates schematically a method operated by a computing entity for inhibiting its own transmission upon receipt of a received data packet which is capable of being decoded;
Fig. 8 illustrates schematically a method followed by a computing entity in a wireless local area network for deferring its own transmissions in response to a received detected wireless signal;
Fig. 9 illustrates schematically a scenario of a first network of communicating computing entities and a second network of communicating computing entities, wherein a first computer entity of the first network has a reception range within which it can receive signals from other computing entities which are of sufficient signal strength to be decoded, and an interference range, in which transmissions from the first computing entity interfere with other computing entities;
Fig. 10 illustrates schematically a first method for setting an active threshold level for determining whether to inhibit a transmission of a computing entity or not, according to a first deferral strategy;
Fig. 11 illustrates schematically a second method for setting a threshold level for received signal strength below which received signals are ignored for the purpose of deferring a computing entity's own transmissions, according to a second threshold setting strategy;

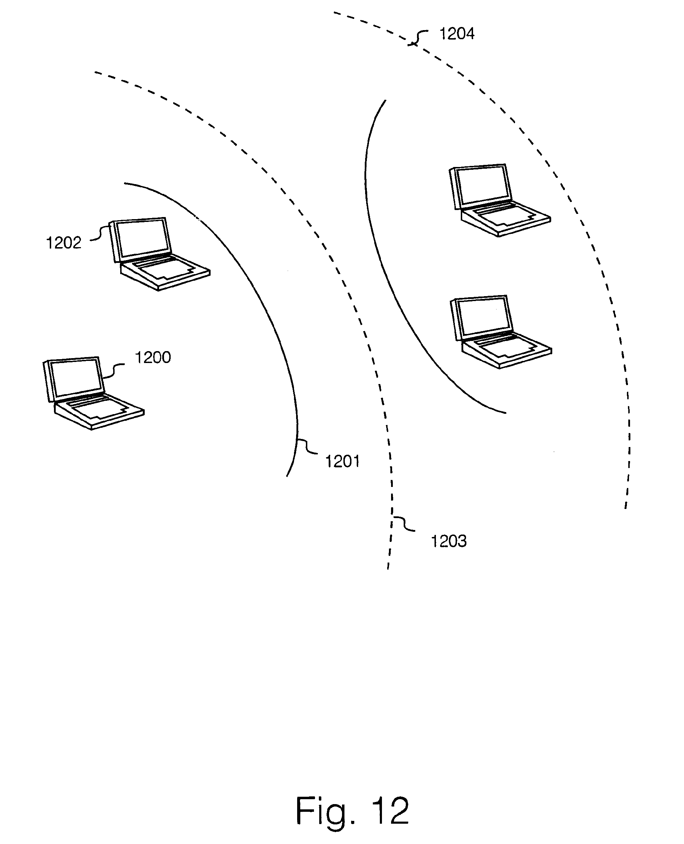

Fig. 12 illustrates schematically how a computing entity in a first network of computing entity communicating over a set of wireless links has a reception range limit within which it can receive signals from other computing entities with sufficient signal strength for decoding the received signals, a deference range, being a range from the first computing entity within which signals from transmitting computing entities within that range will cause the first computing entity to defer its own transmissions, but without being able to decode the transmissions from the entities within the deference range, but outside the reception range, and an interference range within which other computing entities will be able to detect transmissions from the first computing entity, and which may cause interference with the other computing entities within that interference range; and
Fig. 13 illustrates schematically process steps according to a third method according to a best mode of operation, for setting a value of threshold level for received signal strength, below which deferral of a computing entity's own outgoing transmissions are made, according to third threshold setting strategy.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

In this specification, the term "local area network" is used to describe a plurality of computing entities which are interconnected to communicate with each other over a local area. The geographical extent of a local area can range from the order of a few meters to a few tens of meters. In the best mode implementation described herein, wireless links are designed and optimized to operate over distances of around 10 meters between transmitting and receiving computer entities.

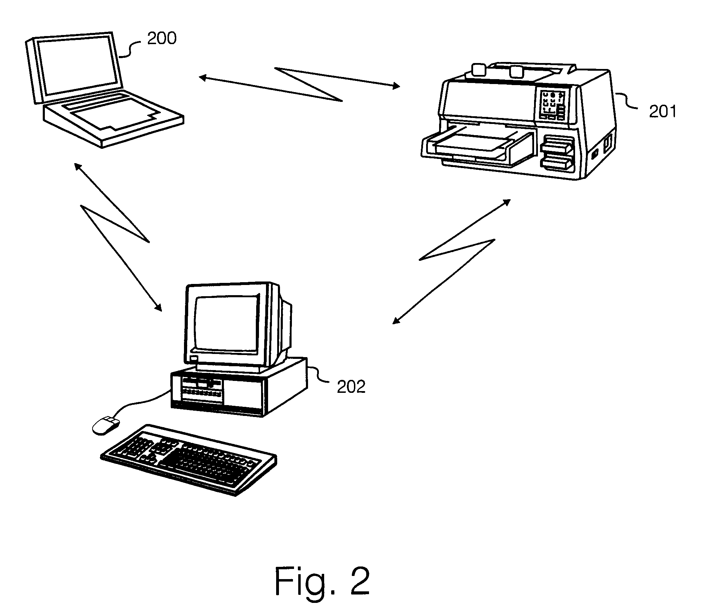

Referring to Fig. 2 herein, there is illustrated schematically a network of computing entities 200-202 in a typical indoor environment communicating by means of wireless transmissions at a frequency in the 5 GHz band, in a carrier sensed multiple access system according to a specific implementation of the present invention. In the CSMA system, all computing entities 200-202 communicate on a same frequency. All communicating computing entities transmit and receive omni-directionally at the same frequency. At any one time, to avoid interference under the CSMA protocol only one computing entity in the network is permitted to transmit.

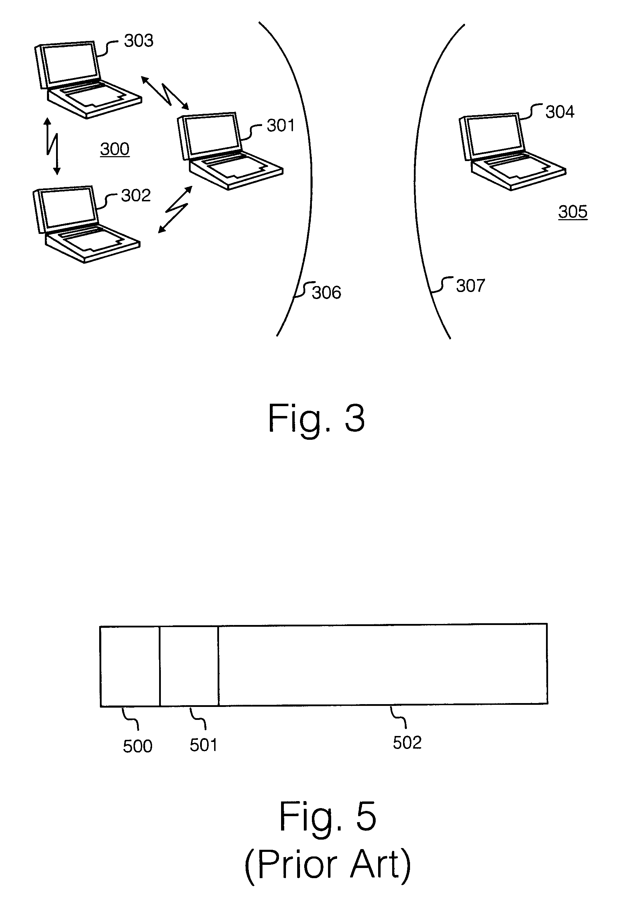

Referring to Fig. 3 herein, there is illustrated schematically a first network 300 comprising a plurality of computing entities 301-303 communicating with each other at a common communications frequency, and a remote computing entity 304 comprising a different remote network 305, communicating within the remote network at the same common frequency. Communications within the first network 300 have a first range, exemplified by a first spatial boundary 306, beyond which, although transmissions may be detected, their content cannot be reliably decoded by computing entities. The remote network 305 has a second range boundary 307, beyond which communications internal to the second network may be detected, but cannot be reliably decoded by computing entities of the first network. The first and second boundaries 306, 307 may vary depending upon ambient conditions in the transmission medium within an office environment and may be affected by factors such as temperature, humidity, movement of objects, placement of objects and the like. The first and second boundaries 306, 307 may be found experimentally by signal level measurement, but in a practical deployment of network computers may be specified in terms of a distance in meters from a computing entity of the first network, within which a similar computing entity transmitting at a same frequency cannot be placed.

Outside of the first boundary 306, transmissions from the first network can still be detected for some distance as interference. Typically, transmissions from the first computing network can be detected to a significant level by other computing entities of the remote network up to a distance of seven times the distance between the first boundary 306 and the nearest computing entity in the first network 301. Similarly, for the remote network 305, although signals detected outside the second boundary 307 cannot be reliably decoded, they can still be detected within a range of approximately seven times the distance between the second boundary 307 and the nearest computing entity 304. Thus, where first and second networks 300, 305 are placed within a distance of seven times the boundary distance (the boundary distance being the distance between the first and second detection boundaries 306, 307 and their corresponding respective nearest computing entities in the appropriate networks), interference is picked up at a level which cannot be decoded, but which is still significant.

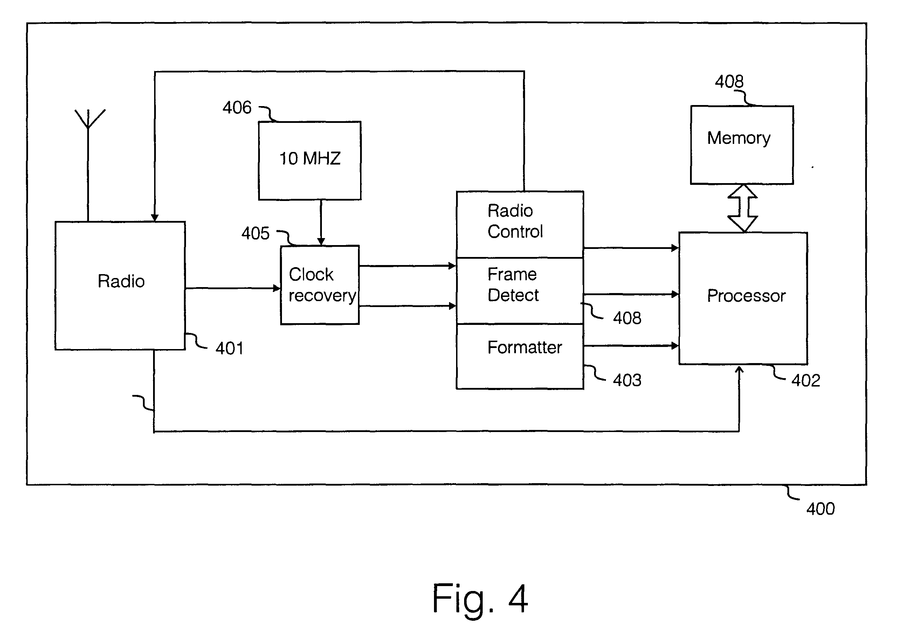

Referring to Fig. 4 herein, there is illustrated schematically a communications port card 400 which may be inserted within the casing of a computing entity for enabling the computing entity to communicate with other computing entities over a wireless local area network. The port card comprises a super heterodyne architecture transmitter and receiver element 401 for transmitting and receiving signals at a nominal center frequency of 5.86 GHz, with intermediate frequencies at 1490 MHz and 70 MHz. The transmitter applies modulation to the 1490 MHz intermediate frequency for transmitting bit pulses. It will be understood by those skilled in the art that those frequencies applied in this case is a specific implementation and in the general case, these frequencies may be varied. The port card comprises a dipole antenna for transmission and reception at the operating frequency. On a transmission path, there is provided a formatter circuit 402 which appends a header data to each of a plurality of packets of data prior to transmission and scrambles the data by combining the data with a maximal length sequence. The formatter circuit 402 receives payload data from a micro-processor 403. A header data is pre-pended to each payload data to form a corresponding representative packet. Micro-processor 403 controls transmission of the packets by controlling the transmitter 401 via transmitter/receiver control circuit 404.

A receive circuit comprises the receiver 401, which inputs received RF data to a clock recovery circuit 405. Starter frame detection circuit 407 forms packet synchronization by comparing the header data of received data packets with a stored reference sequence of data. A packet is deemed to have arrived if a detected sequence of 32 bits exactly matches the referenced sequence. Once the packet has been detected, a length field comprising the header data of the packet is read so that a position of the end of the packet can be determined. This information is passed to processor 403 so that the packet can be processed for a cyclical redundancy check (CRC).

Control circuit 404 passes control signals to the transmitter/receiver 401 which includes control signals to switch the transmitter/receiver between receive and transmit modes. With the exception of the clock recovery circuit 406 which operates at 100 MHz, the rest of the circuit operates at 10 MHz, this being compatible with the highest data rate.

The transmitter and receiver elements of the port card of Fig. 4 are designed to operate at a carrier frequency suitable for indoor usage, for example 5 GHz or thereabouts. All computer entities within a network have port cards which operate at the same carrier frequency and transmission of messages by each computer entity is controlled according to a known access control protocol, for example the known CSMA protocol. Data transmission rates are selected such that in normal usage an average data transmission rate between computing entities is sufficiently high to carry continuous data over a transmission link, taking account of any interruptions in transmission and reception which may occur as a result of lost data due to multi-path fading at higher data rates, interruptions in transmission paths due to passage of obstacles, movement of people and the like in the environment in which the network operates. For example where video data is transmitted at 1.5 MBits/s then the average design data rate over a prolonged period must be greater than 1.5 MBits/s in order to carry this traffic. In the best mode implementation, transmission of packetized data is made at a plurality of data rates, which may be above and below the average design data rate over which a link must operate. When conditions of poor transmission are encountered at a higher data rate, a transmitting entity automatically lowers the rate of data transmission to a rate at which reception of the transmission is more likely to be successful. Transmission between computing entities is made by means of a plurality of packets transmitted by a transmitting entity for reception by a receiving entity. Upon successful receipt of a packet by the receiving entity, the receiving entity transmits a confirmation signal back to the transmitting entity, so that the transmitting entity is able to determine that the packet has been successfully received over the wireless link.

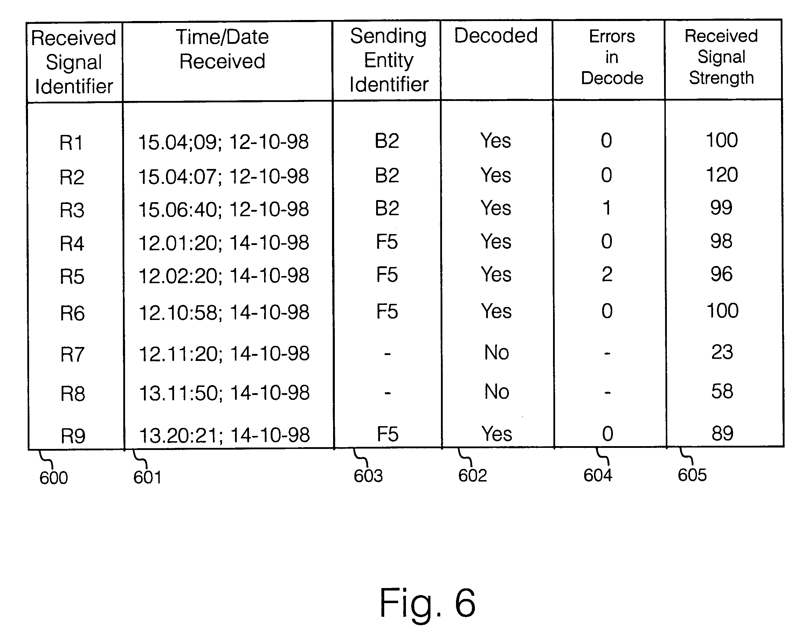

Referring to Fig. 5 herein there is illustrated schematically a data packet used for transmission of the wireless links in the local area network of computing entities 300. Each data packet comprises a header source portion 500 identifying an address of the sending entity; a header recipient portion 501 containing data identifying an address of an intended recipient entity; and a data portion 502 containing part of a data frame of data, being a payload of the data packet.

Referring to Fig, 6 herein, there is illustrated schematically a table of data stored in a memory 408 of the port card 400, which memory may be provided integrally of the microprocessor 403, containing digital data describing characteristics of a sequence of signals at the communications frequency, received by the port card. Each signal is allocated a unique signal identifier data 600. In the data table for each received signal is stored data describing a time and date on which the signal was received 601, an identification of whether the signal was capable of being decoded or not 602, data identifying a sending entity 603, in cases where the signal was capable of being decoded, data describing a number of errors found when decoding the signal 604, and data describing a signal strength of the received signal 605.

The received signal strength indicator (RSSI) measures the strength, in terms of power level, of a received signal, and produces an 8-bit digital signal representing a strength of the received incoming radio signal. The received signal strength indicator correlates values of received signal strength of a number of packets which it receives. It does this by identifying individual packets by reading the packet source and recipient data 500, 501 to identify signals as being definite packets transmitted within the network. A received signal strength of these packets over a number of packets on a rolling basis is stored within the received signal strength indictor. A value representative of a typical received packet signal strength may be obtained by the microprocessor from a correlation analysis of a sequence of received signal strengths from a corresponding sequence of packets. The microprocessor stores a list of received signal strength levels associated with different frames of received data packets. The microprocessor stores a record of a result of a decode attempt at the data portion of each packet. If a packet is successfully decoded, then the microprocessor stores in the data table data describing that successful decoding. If a packet was unsuccessfully decoder, then the microprocessor stores in its database information describing that the packet was unsuccessfully decoded. The success or lack of success of decoding of each packet is stored, in a manner which is directly comparable to the received signal strength of that particular packet, so that information describing a minimum received signal strength for successful decoding of a packet is determinable by the microprocessor.

The microprocessor, when it attempts to decode the source data 500 of the data packet may apply an error correction code. Similarly, the microprocessor may apply an error correction code for decoding the destination address portion of the packet 501 and the data portion 502 of the packet. In the data table, the microprocessor may store information describing whether the error code found any errors in the source address, destination address, or data portion of the data packet.

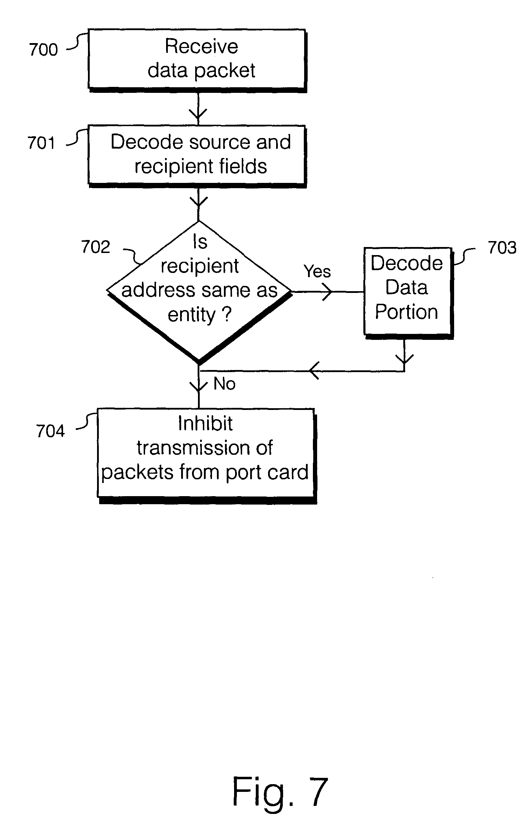

Referring to Fig. 7 herein, there is illustrated schematically steps carried out by the communications port 400 of the computing entity on receipt of a signal which cannot be properly decoded to yield a recipient address. Transmissions between computing entities within the network are by means of digital packets comprising an address portion 500 identifying a sending entity, an address portion 501 identifying the intended recipient entity, and a data portion 502 containing a data transmitted. Because each entity within the network receives an omni-directional transmission from each other sending entity in the network in step 700, each entity within the first network 300 decodes the recipient entity address, and determines whether that receiving entity itself is the intended recipient of the message in step 701. If the entity is the intended recipient of the message in step 702, then in step 703 the entity decodes the data portion of the message and then proceeds to inhibit its own transmission for a predetermined period in step 704. However, if the receiving entity determines that its own address is not the same as that specified in the receiving entity field 501 of the data transmission in step 702, then it does not decode the data portion of the message, but proceeds to inhibit its own transmissions for a predetermined period in step 704. For packets which are capable of being decoded, above a threshold level, transmission of packets at the communications frequency is inhibited by the port card for a predetermined period in step 704.

The process of Fig. 7 handles suppression of re-transmissions by entities within the first computer network upon receipt of signals which are properly decoded. However, where a signal is received which, because of its poor signal to noise ratio, or other corruption of the digital message cannot be decoded, then decoding in step 701 cannot be carried out. Under these circumstances, the signal may be from a remote computing entity which is not part of the first network, or may be noise or background interference.

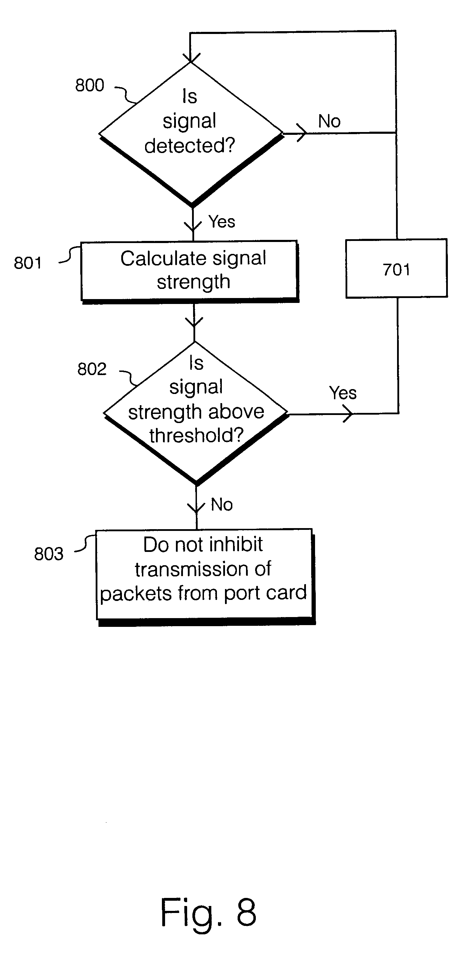

Referring to Fig. 8 herein, there is illustrated a process carried out by the port card 400 upon detection of an incoming signal which runs parallel with the process of Fig. 7. In step 800, the receiver continually monitors the transmission frequency for signals. If a signal is detected in step 800, then the signal strength is calculated by the received signal strength indicator in step 801. In step 802, if the signal strength is above a predetermined threshold value, then the content of the data packet is passed for decoding, as in step 701 herein. However, if the signal strength is below the predetermined threshold, then the facility for transmission of packets from the port card remains enabled, and is not inhibited in step 803.

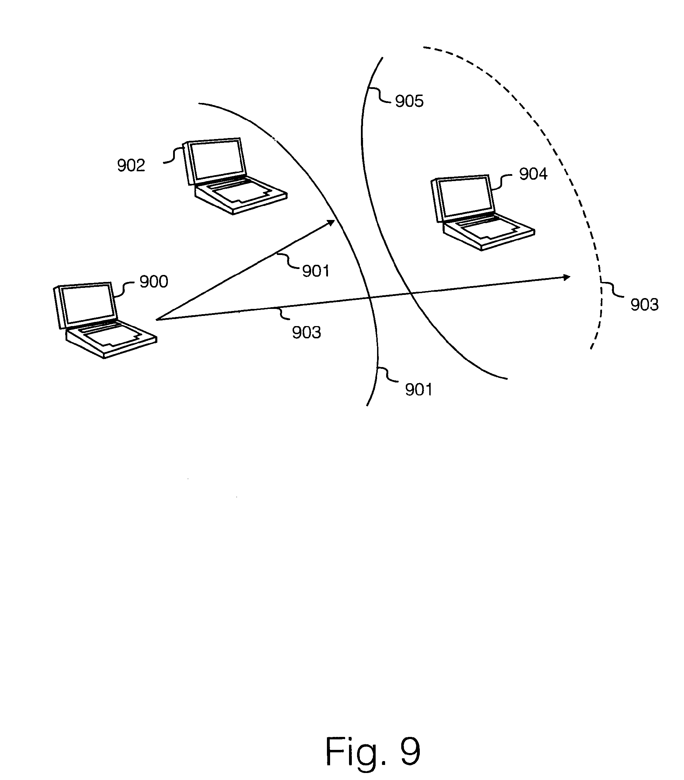

Fig. 9 illustrates the case where first and second computing entities 900, 901 in a first network communicate with each other. First computer 900 has a range of reception 902 within which it can successfully receive and decode transmissions from other computing entities and a range of interference 903, within which transmission from other computing entities will be detected to a significant level, but are not decodable. Similarly, a third computer entity 904 in a second, remote network has a second range of reception 905 within which it can receive and decode transmissions. The second range of reception of the third computer entity in the second network may fall within the range of interference 903 of the first network. Because the interference range of a network is up to seven times its reception range, this implies that an entity which is communicating for example 70 meters away could prevent communications between nodes that are just 10 meters apart, where 10 meters is the reception range of a node, due to interference.

According to a specific method of the present invention, each computing entity sets its own threshold signal level, such that for signals received with a strength below that threshold level, the computing entity will ignore such signals for the purpose of inhibiting its own transmissions. For signals which are received having a strength above that threshold level, these will inhibit the computing entity's own transmissions. By setting a threshold level, this effectively sets the reception range of a network. Variation of the threshold level has a corresponding respective variation of the threshold range of a network.

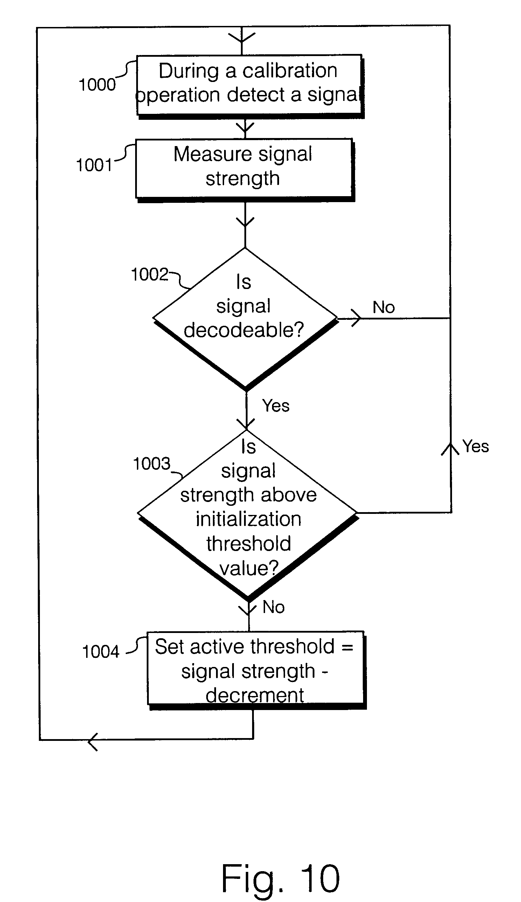

There are various strategies for setting the threshold level, by actively incrementing or decrementing the threshold level as described in Figs. 10, 11 and 12 herein. The strategies are applied as follows:

Firstly, running a minimum received signal strength strategy as illustrated in Fig. 10, a minimum received signal strength for a plurality of successfully received packets within a recent window of time (or preset number of packets) is adjusted, and the threshold level is adjusted to slightly below the minimum of the received signal strength values which are recorded in the sliding window of time or packets. This is the most aggressive strategy for setting escalation of the active threshold level, since the range in which each computing entity defers its own transmissions, is very close to, or smaller than the maximum reception range 902 of the computing entity. Collisions between competing transmitting entities can happen frequently if there are other transmitting entities in the reception range, which were not recorded by the current window of time, or current window of packets stored in the data table, as illustrated in Fig. 6 herein. This effect is most apparent when a computing entity which has not recently transmitted suddenly emerges from a silence of transmission.

Referring to Fig. 10 herein, there is illustrated schematically a process operated by the port card according to the first strategy for adjusting a level of signal strength threshold for which received signals having strength below said threshold do not have an inhibitive effect on the transmission of outgoing signals from the port card. The calibration system of Fig. 10 is applied independently by each of the computing entities within a network. Thus, effectively each computing entity within the network sets its own threshold level, for which received signals having a signal strength below that level will not be permitted to disable transmissions from the computer entity itself. Although, in the general case, each computer entity will set its own corresponding respective threshold level, under certain circumstances, for example where all computer entities are positioned such that they receive substantially equal signals from other computer entities within the network, the threshold levels of individual computer entities may, by chance, be very similar to each other or approximately the same.

The port card is pre-loaded with an initialization threshold value, used as the first threshold value on boot up during the calibration process, and which is stored in memory. This initialization threshold level may be a factory preset level. On first start up of a computer entity, e.g. after a boot operation, the port card calibrates itself to set an initial threshold level for that particular port card. The initial threshold level is set in response to received signals from other computer entities, whether within the network or outside the network, and from the general level of signal at the communications frequency. In step 1000, communications signals from other computer entities are received by the port card, and in step 1001 each received signal has its signal strength measured by the received signal strength indicator, resulting in a digital output data describing the strength of the signal. In step 1002, it is attempted to decode the signal, irrespective of the signal strength. If the signal cannot be decoded, then the fact that that signal cannot be decoded is stored as data in a data table by the microprocessor along with the signal strength of the signal. Since the signal is not decodable, the port card awaits a new signal in step 1000. If the signal is decodable, this indicates that the signal has come from a corresponding computing entity. Data describing the fact that the signal has been decoded in step 1002 is stored in the data table, along with data described in the received signal strength. If, in step 1002, the received signal strength is above the initial preset threshold value, then no adjustment of the active threshold level is made by the microprocessor, and the port card awaits receipt of the next signal. However, if the received signal strength is below the initialization threshold level in step 1003, this indicates that signals can be decoded which are at a signal strength below that of the factory preset initialization threshold value. Therefore, in step 1004, an active threshold level, which replaces the preset initialization threshold value of signal strength is set as being the signal strength of the decoded signal, minus a predetermined decrement value. This has the effect of setting an active threshold value which is slightly below the received signal strength of the last successfully decoded received signal.

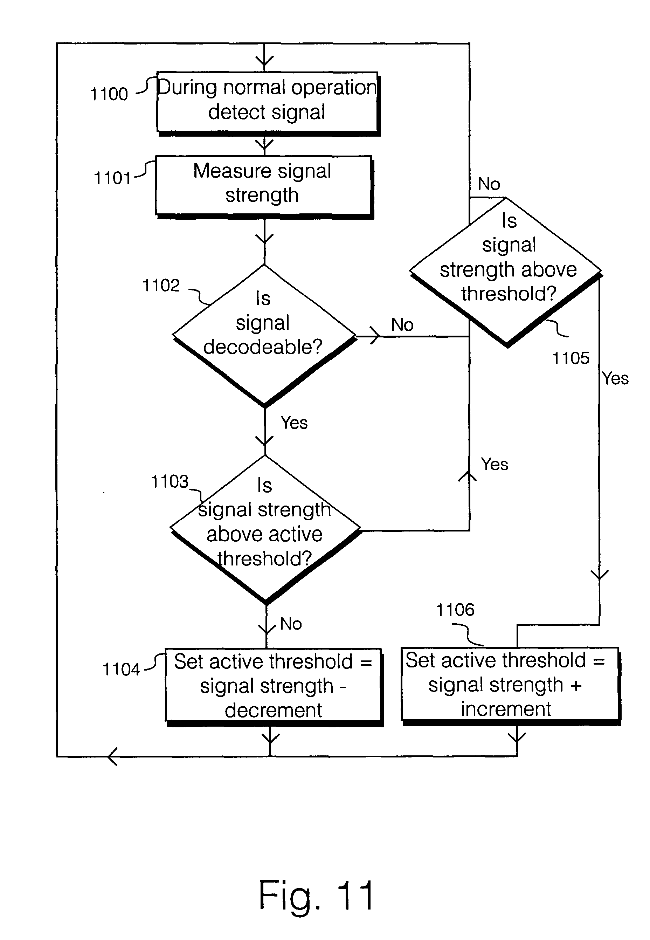

Referring to Fig. 11 herein, there is illustrated schematically process steps carried out by the microprocessor of the port card 400 for adjustment of the active threshold level during routine operation of the port card according to the second strategy. In step 1100, incoming signals at the communications frequency are detected on a continuous basis. In step 1001, for each detected signal, the signal strength is measured by the received signal strength indictor, resulting in a corresponding respective output signal strength digital data which is stored in a data table of the microprocessor. In step 1102, it is attempted to decode the received signal. If the signal is decodable then, as previously described in step 701, the source and recipient fields are also attempted to be decoded. It is not necessary to actually decode the source and recipient fields of the packet in order to determine whether the signal is decodable. It may be that a decodable signal of sufficient strength has been transmitted by an alternative source, in which case the computing entity can distinguish the signal on the basis of decoded address data in the source and recipient fields in determining whether or not to respond to the incoming signal. In step 1003, if the received signal strength is above the active signal threshold applicable at the time, then no modification to the level of the active signal threshold is made. However, if the signal strength of the received decodable signal is below the current active threshold level, then the current active threshold level is reset by a decrement amount, such that a new active threshold level is set below the previous currently active threshold level in step 1104.

The active set threshold level is the threshold level below which received signals do not disable the transmission capability of the computing entity. Above the active threshold level there is a range of signal strength levels, which cause deferral of the computing entity's own transmissions.

In step 1105, if the signal is not decodable, but the signal received is above the active threshold level, then in step 1106, the threshold level is raised by setting the active threshold level to be the signal strength, plus a predetermined increment, so that when the computing entity wishes to transmit itself, it is not deferring its transmission to signals which it cannot decode.

The second active threshold level setting strategy, as illustrated with reference to Fig. 11 herein, escalates the active threshold level to slightly below a level at which a packet will be successfully decoded. The effect of this is to bring the range at which the computing entity will defer transmission, close to the computing entity's reception range. The probability of collisions, where different computing entities within a same network both transmit at the same time, is slower than in the first strategy, but there is still a chance of loss of packets due to simultaneous transmission between two computing entities in the same network.

A third strategy for setting a threshold level, as illustrated with reference to Fig. 12 herein is to set a deference range between a computing entity's reception range and its interference range, the deference range being the range at which the entity defers transmission of its own communications when receiving a signal from a computing entity within that range. Under these circumstances, it is possible to establish empirically, a level of interference signal level from a computing entity in an unconnected remote network such that the probability of packet loss within a first network is acceptable, for example 10% probability of packet loss. Using this method, it may be possible to minimize an amount of loss of packets due to collisions, and increase as far as possible the threshold level in order to reduce unwanted deference. In Fig. 12, a computing entity 1200 has a reception range 1201 within which it can successfully decode received signals, for example by a computing entity 1202 in a same network; a deference range 1203 which corresponds to an active current threshold level set within the first computing entity and for which the computing entity will defer to other transmitting entities on the same communications frequency within that range; and an interference range 1204, within which the computing entity will cause interference with other computing entities within that range.

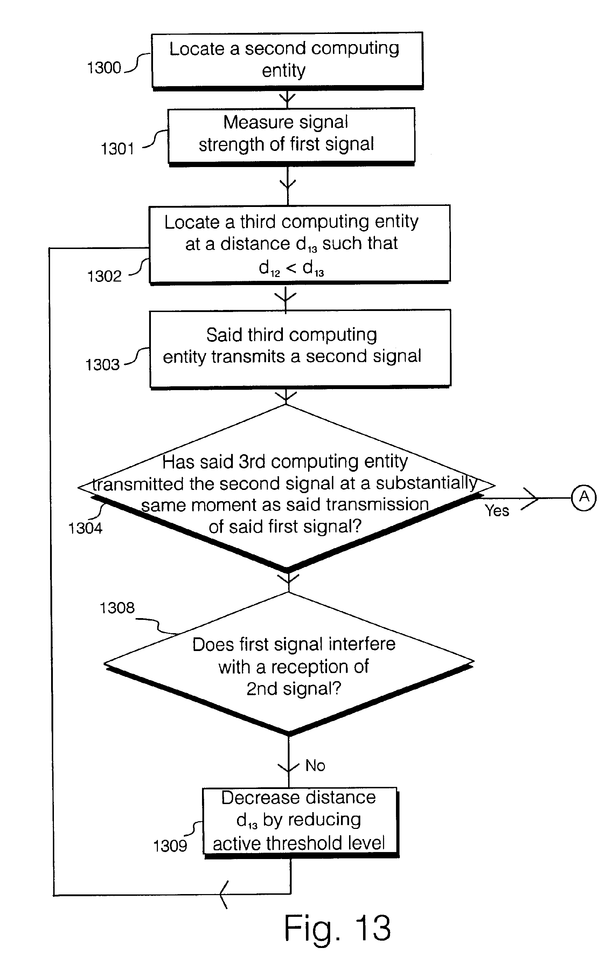

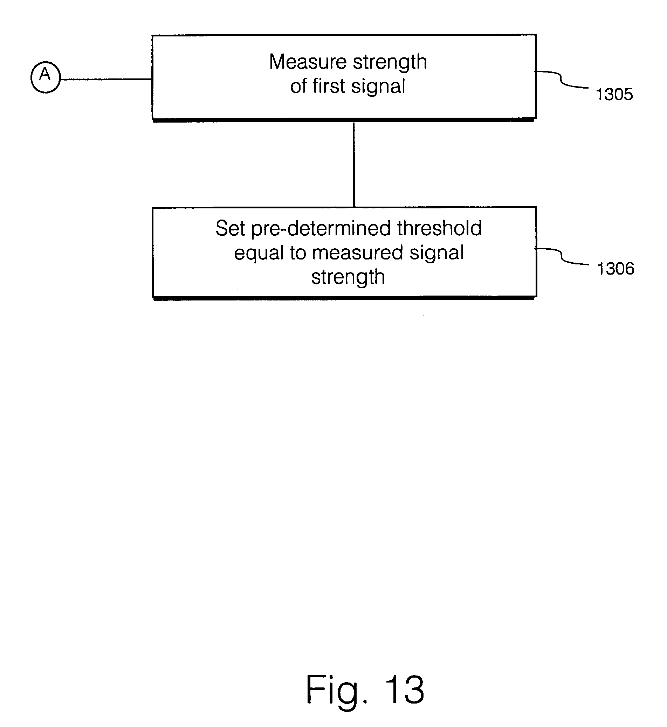

Referring to Fig. 13 herein, there is illustrated a process operated by the port card 400 for implementing a method according to the third strategy described herein. The third strategy herein comprises a best mode strategy, because even if a transmission is being received from a remote computing entity, reception and decoding of a transmission emanating from a computing entity within a first computing entity's reception range can always be made. In a network of computers, each computing entity may operate the method as described with reference to Fig. 13. In step 1300, a first computing entity operating the process locates a corresponding second computing entity, from which it receives signals. In step 1301 the first computing entity measures the signal strength of a received first signal from the second computing entity within the same network. In step 1302, the first computing entity locates a third computing entity at a distance D₁₃, such that a distance between the first computing entity and the second computing entity D₁₂ is less than the distance between the first computing entity and the third computing entity D₁₃. The third computing entity transmits a second signal, which is received by the first computing entity 1303. In step 1304, if the third computing entity transmits the second signal substantially at a same time as the transmission of the first signal from the second computing entity, then in step 1205 the first computing entity measures the signal strength of the first signal from the second computing entity and sets an active threshold level equal to the signal strength of the measured first signal in step 1206. However, if second signal interferes with reception of the first signal 1208, then the deference distance D₁₃ is reduced by reducing the active threshold level in step 1209.

## Claims

1. A method for maximizing channel use in a wireless network comprising of a plurality of computing entities communicating with each other over a plurality of wireless links, said method comprising the steps at a first said computing entity:
determining a signal transmission threshold level at which a received signal having a signal strength above said level will cause inhibitation of transmit signals by a first said computing entity;
receiving a signal transmitted by a said computing entity;
measuring a signal strength of said received signal; and
if said measured signal strength is greater than said pre-determined threshold signal level, then inhibiting transmission of a said transmit signal.

2. The method as claimed in claim 1, wherein said step of determining a signal level transmission threshold comprising the steps of:
comparing a signal strength of said received signal with said signal threshold level; and
if said signal is successfully decoded without errors, and if said measured received signal strength is lower than said signal threshold level then reducing a value of said signal threshold level.

3. The method as claimed in claim 1 or 2, wherein said step of determining a signal threshold level occurs continuously during a normal operation of a said computing entity.

4. The method as claimed in claim 1, wherein said step of determining a signal threshold level is performed during a calibration of said first computing entity.

5. A means for maximizing channel use in a wireless network comprising a plurality of computing entities, said means comprising:
a radio transmitter;
a radio receiver;
a received signal strength measuring means for measuring a strength of a received signal from said receiver;
a decoding means for decoding a content of received signal data;
processor means configured to set a threshold level according to a result of said decoding; and
data storage means for storing data describing a plurality of received signals,
wherein said threshold level is set according to an analysis of accumulated data stored in said data storage means describing characteristics of a set of said received signals; and said transmitter is configured to be inhibited for transmission of signals in response to a said received signal having a signal strength above said threshold level.

6. A communications device for communicating between a plurality of entities within a local area network by wireless transmission, said communications device comprising:
a transmitter device;
a receiver device;
a received signal strength indicator device;
a data processor unit; and
a memory;
wherein said communications device is capable of both receiving and sending transmissions at a common communications frequency;
wherein said communications device is configured to defer making a transmission upon receiving a wireless signal having a received signal strength above a preset signal strength threshold level value.

7. The communications device as claimed in claim 6, configured to ignore any received signals at the communications frequency which have a signal strength below the present threshold value, for the purpose of deferring transmissions of the communications device.

8. The communications device as claimed in claim 6, configured for storing an electronic data table comprising:
data describing a signal strength of at least one received signal;
a unique identifier identifying said at least one received signal; and
a data describing whether said at least one received signal was successfully decoded or not.

9. The communications device as claimed in claim 8, wherein said data table stores:
data describing a computing entity from which a received signal originates;
a number of errors corrected in decoding said received signal; and
a time at which said received signal was received by said communications device.

10. The communications device as claimed in claim 6, wherein said microprocessor device is configured by a stored program for setting and resetting said threshold level dynamically based upon data describing a plurality of received signal strengths of a plurality of received signals.

11. A method of communicating between a plurality of communicating computing entities in a wireless local area network system comprising said plurality of computing entities, said method comprising the steps of:
each said computing entity of said network sending and receiving wireless communications signals;
each said computing entity deferring transmission of its own transmitted signals for a time period after said computing entity receives a signal at said communications frequency said signal having a signal strength above a settable active threshold level.

12. The method as claimed in claim 11, wherein each said computing entity defers its own transmissions if said received signal is above said threshold level and is decodable by said computing entity.

13. The method as claimed in claim 11, further comprising the step of:
at least one said computing entity dynamically varying its said threshold level in response to received wireless transmissions originating from other ones of said computing entities within said network.

14. The method as claimed in claim 11, comprising the step of:
at least one said computing entity dynamically setting its said threshold level according to a predetermined threshold level strategy stored in the form of pre-stored coded computer instructions.

15. The method as claimed in claim 11, wherein said threshold level is set by performing the steps of:
measuring a signal strength of a received signal;
attempting to decode said signal;
if said signal is decodable, checking whether said signal strength is below a currently active threshold level value; and
resetting said threshold level value to a value based upon said strength of said received signal minus a predetermined decrement value.

16. The method as claimed in claim 11, wherein a value of said threshold level is set according to the steps of:
measuring a signal strength of a received signal;
attempting to decode said received signal;
if said received signal is decodable, comparing a strength of said signal with a currently active value of said threshold level; and
if said received signal is decodable, and a signal strength of said received signal is below said threshold level, resetting said value of said threshold level to a value based upon said received signal strength, minus a predetermined decrement value.

17. The method as claimed in claim 16, further comprising the steps of:
if said received signal is not decodable, checking whether a strength of said received signal is above said currently active threshold level value; and
resetting said threshold level value to a value based upon said signal strength, plus a predetermined increment value.
